# EUROPÄISCHE PATENTSCHRIFT

(11) **EP 2 987 761 B1**
(45) Veröffentlichungstag und Bekanntmachung des Hinweises auf die Patenterteilung: **24.03.2021**
(21) Anmeldenummer: 15179004.5
(22) Anmeldetag: 30.07.2015
(51) Int. Cl.: B66F 9/075, B25J 9/16, B66F 9/18

(54) **FLURFÖRDERZEUG ZUM KOMMISSIONIEREN**
INDUSTRIAL TRUCK FOR PICKING
CHARIOT DE MANUTENTION DESTINE AU COMMISSIONNEMENT

(30) Priorität: 20.08.2014 DE 102014111886
(43) Veröffentlichungstag der Anmeldung: 24.02.2016
(73) Patentinhaber: STILL GmbH, 22113 Hamburg (DE)
(72) Erfinder: Tozzi, Fabien, 22083 Hamburg (DE)
(74) Vertreter: Patentship Patentanwaltsgesellschaft mbH

(56) Entgegenhaltungen:
- CN-A- 101 691 808
- JP-A- 2009 184 826
- US-A- 3 241 687
- US-A- 4 698 775
- US-A1- 2007 189 888

## Beschreibung

Die Erfindung betrifft einen Kommissionierer. Insbesondere betrifft die Erfindung ein Flurförderzeug nach dem Oberbegriff des Patentanspruchs 1.

Für das Kommissionieren, das Zusammenstellen von Waren entsprechend einer Bestellung oder beabsichtigten Lieferung, werden unter anderem als Flurförderzeuge sogenannte Kommissionierer eingesetzt. Diese Kommissionierer sind Gabelhubwagen, die Deichsel geführt sind und als Mitgängerfahrzeuge betrieben werden oder aber auch eine Fahrerplattform aufweisen und im Mitfahrerbetrieb eingesetzt werden. Mit dem Kommissionierer werden in einem Lager nacheinander alle Positionen angefahren, in denen aufzunehmende Waren gelagert sind und diese Waren in einen Transportbehälter, wie etwa einen Gitterkorb, oder auf eine Palette von der kommissionierenden Person gelegt. Sobald das Kommissionieren beendet ist, wird der befüllte Transportbehälter an einer Übergabeposition von der Lastgabel abgesetzt oder etwa auch in ein Lieferfahrzeug verladen.

Besonders wichtig ist dieses Kommissionieren für die Logistik des Einzelhandels, bei der Waren für Verkaufsstützpunkte ausgeliefert werden müssen und diese zuvor im Verteillagern von Personen auf einer Palette oder einem Trolley-Anhänger zusammengestellt bzw. kommissioniert werden. Da Lagerfläche teuer ist und durch hohe Regale möglichst optimal ausgenutzt werden soll, werden neben Horizontalkommissionierern auch Vertikalkommissionierer verwendet, bei denen eine Lastgabel zusammen mit einer Standplattform für eine Person angehoben werden kann, um auch aus höheren Regalplätzen Waren aufzunehmen.

Nachteilig an diesem Stand der Technik ist, dass dies sehr personal- und somit kostenintensiv ist. Durch die große Anzahl an erforderlichem Personal und fahrenden Flurförderzeugen beim Kommissionieren kann es auch zu den bekannten Problemen durch menschliche Fehlleistungen kommen, wie Beschädigungen an der Ware, den Flurförderzeugen, Regalen oder an Gebäuden.

Um diese Vorgänge zu automatisieren, ist der Betrieb eines Lagers nach dem Prinzip "Ware zum Mann" bekannt, bei dem angelieferte Waren von Paletten entnommen werden, durch Fördervorrichtungen automatisiert an feste Kommissionierplätze verteilt werden, an denen Personen die Paletten und Transportbehälter mit den verschiedenen Waren an einem Ort befüllen und dadurch kommissionieren. Weiterhin ist es denkbar, dass Roboter auf diesen festen Plätzen auf Paletten kommissionieren. In dieser speziellen Ausführung kann man auch von einem Kommissionieren nach dem Prinzip "Ware zum Roboter" sprechen.

Nachteilig an diesem Stand der Technik ist jedoch, dass dies einen grundsätzlich neuen Aufbau eines Lagers bedeutet und somit die gesamte Infrastruktur umgewandelt werden muss und es nicht möglich ist, ein bestehendes Lager weiter zu verwenden.

Weiterhin sind Assistenzsysteme bei Kommissionierern bekannt, die ein teilweise autonomes Fahren, beispielsweise über eine Fernbedienung einer mitlaufenden Person ermöglichen. Auch sind vollständig autonom fahrende Flurförderzeuge bekannt, wie etwa automatisierte Gabelstapler.

Die CN 101 691 808 A offenbart einen Bauroboter unter Verwendung eines Schubmaststaplers.

Der vorliegenden Erfindung liegt die Aufgabe zugrunde, ein Flurförderzeug für den Einsatz zum Kommissionieren zur Verfügung zu stellen, das die zuvor genannten Nachteile vermeidet und mit dem in einem bestehenden Lager ein möglichst weitgehend automatisiertes Kommissionieren möglich ist.

Diese Aufgabe wird durch ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird dadurch gelöst, dass bei einem Flurförderzeug zum Kommissionieren mit mindestens einer Lastaufnahmevorrichtung für einen Transportbehälter für Waren, insbesondere eine Lastgabel, sowie einem Fahrantrieb für das Flurförderzeug und mit Sensormitteln zur Erfassung der Umgebung, ein Roboter-Manipulatorarm mit einem Greifer an dem Flurförderzeug angeordnet ist, der mit dem Greifer den Bereich der Lastaufnahmevorrichtung sowie mindestens einen Bereich außerhalb der Grundfläche des Flurförderzeugs erreichen kann und durch eine Steuerung anhand der Daten der Sensormitteln gesteuert werden kann. Vorteilhaft ist der Roboter-Manipulatorarm ein sechs Achsen Gelenkarm und kann der Roboter-Manipulatorarm mit dem Greifer durch die Steuerung und Aufgrund von Daten, die beispielsweise von einem Warenwirtschaftssystem übertragen werden, gesteuert werden, um Waren aus einer Lagerposition zu entnehmen und in dem Transportbehälter auf einer Lastaufnahmevorrichtung zu positionieren. Roboter-Manipulatorarme sind aus dem Bereich der Industrieroboter bekannt und können mit einem Greifer in einem bestimmten Bewegungsraum frei beweglich Gegenstände aufnehmen und von einer Position zu einer anderen bewegen, wie auch mit Werkzeugen arbeiten. Vorteilhaft kann daher gesteuert durch die Steuerung und aufgrund von Daten, die beispielsweise von einem Warenwirtschaftssystem übertragen werden, der Roboter-Manipulatorarm Waren aus einer Lagerposition entnehmen und in einen Transportbehälter auf einer Lastaufnahmevorrichtung positionieren. Dadurch ist ein Kommissionieren ohne menschliche Tätigkeit und automatisiert möglich. Indem der Roboter-Manipulatorarm einen Bereich außerhalb der Grundfläche des Flurförderzeugs erreichen kann, ist es ihm möglich, über das Flurförderzeug hinaus beispielsweise in ein Regalfach oder zu einer Lagerposition zu greifen. Die Informationen für die aufzunehmenden Waren können auf alle im Stande Technik bekannten Art und Weisen, insbesondere durch zur Verfügung stellen auf einem Datenträger, Abspeicherung vor Beginn des Kommissionierauftrages oder auch Übertragung über Datenübertragungssystem aus einem Warenwirtschaftssystem erfolgen. Die Steuerung der Bewegungsabläufe des Roboter-Manipulatorarms kann aufgrund der Daten der Sensormitteln erfolgen, indem beispielsweise die Waren identifiziert werden sowie deren Position. Dies kann aber auch kombiniert werden oder vollständig ersetzt werden durch übertragene Daten aus einem Warenwirtschaftssystem, wenn die Position und Anordnung der Waren hinreichend genau festgelegt ist. Vorteilhaft wird Personalaufwand eingespart und können potentielle Fehlerquellen aufgrund menschlichen Versagens ausgeschlossen werden. Insbesondere ist es möglich, das erfindungsgemäße Flurförderzeug in einem herkömmlichen, schon bestehenden Lager einzusetzen. Gegebenenfalls kann dies auch neben einer Kommissionierung durch Personen erfolgen. Durch einen sechs Achsen Manipulatorarm ergibt sich eine günstige freie Beweglichkeit, die einem menschlichen Arm vergleichbar ist.

Der Roboter-Manipulatorarm kann als Teil eines Industrieroboters an dem Flurförderzeug angeordnet sein.

Industrieroboter stehen als ausgereifte Technik zur Verfügung. Vorteilhaft kann daher ein komplettes Gerät einschließlich einer Steuerung des Industrieroboters genutzt werden.

In einer günstigen Ausgestaltung ist das Flurförderzeug ein Gabelhubwagen mit Lastarmen und einem Antriebsteil, wobei die Lastaufnahmevorrichtung durch die Lastarme und/oder eine auf den Lastarmen angeordneten Lastgabel gebildet wird.

Ein solcher Gabelhubwagen ist beispielsweise als Horizontalkommissionierer bekannt, und weist ganz allgemein zwei Lastarme mit Lastrollen auf, die durch einen Initialhub anhebbar sind. Über diesen Lastarmen kann zusätzlich eine Lastgabel angeordnet sein, die einen höheren Hub ermöglicht und bei einem Hochhubwagen zum Einsatz kommt. Es kann als so genanntes Vierradfahrzeug beispielsweise ein seitliches Antriebsrad mit einem seitlichen Stützrad auf der gegenüberliegenden Seite vorgesehen sein oder bei einem Dreiradfahrzeug ein mittig angeordnetes Antriebsrad mit eventuell zwei Stützrollen oder Stützelementen. Dabei wird zumeist dieses Antriebsrades über eine Deichsel direkt oder indirekt über einen Lenkmotor gelenkt.

Vorteilhaft ist der Roboter-Manipulatorarm auf dem Antriebsteil angeordnet.

In einer günstigen Ausgestaltung ist ein Batteriefach zwischen Antriebsteil und Lastaufnahmevorrichtung und der Roboter-Manipulatorarm auf dem Batteriefach angeordnet.

Dadurch befindet sich der Roboter-Manipulatorarm unmittelbar an der Hinterseite der Lastaufnahmevorrichtung und kann den gesamten Bereich eines auf der Lastaufnahmevorrichtung aufliegenden Transportbehälters, beispielsweise einer Palette, erreichen.

Vorteilhaft ist die Lastaufnahmevorrichtung an einem Hubmast anhebbar geführt und der Roboter-Manipulatorarm an dem Hubmast anhebbar.

Neben Horizontalkommissionieren gibt es auch Vertikalkommissionierer, die einen Hubmast aufweisen. Diese sind zum Teil auch als sogenannte "Mann oben Geräte" ausgeführt, bei denen eine Fahrerstandplattform mit der Lastaufnahmevorrichtung angehoben werden. Es ist möglich, den Roboter-Manipulatorarm ebenfalls anhebbar vorzusehen, beispielsweise anstelle einer solchen Fahrerstandplattform.

Vorteilhaft ist der Hubmast ein Teleskopmast ist mit mindestens einem Ausfahrmast und der Roboter-Manipulatorarm an dem Ausfahrmast angeordnet.

Der Roboter-Manipulatorarm kann beispielsweise an dem obersten Ausfahrmast bei mehreren Ausfahrmasten vorgesehen werden. Bei Flurförderzeugen mit der beschränkten Platzverhältnissen, wie etwa einem Hochhubwagen-Gabelhubwagen kann auf diese Art und Weise auch ein anhebbarer Roboter-Manipulatorarm vorgesehen werden, ohne das Flurförderzeug vollständig umzukonstruieren.

Es kann eine Lagerposition für einen oder mehrere Greifer zum Wechseln vorhanden sein.

Für verschiedene Waren kann es sinnvoll sein, unterschiedliche Greifer einzusetzen. Dafür kann eine Alterung oder Leitungspositionen einem Flurförderzeug vorgesehen werden, beispielsweise im Fall eines Gabelhubwagens auf der Oberseite des Antriebsteils. Wie auch bei Industrierobotern im Einsatz beim Bearbeiten von Werkstücken in Bezug auf das Werkzeug kann dann je nach Einsatzzweck und Art der Greifer automatisch ausgetauscht werden.

Die Sensormittel können optische Sensoren sein, die die Umgebung erfassen, insbesondere Laserscanner oder bildaufnehmende Sensoren mit Bildverarbeitungsmitteln.

Insbesondere können hier optische Sensoren zum Einsatz kommen die Distanzen vermessen können, wie etwa Laserscanner oder "Time of Flight" (TOF) Kameras. Dadurch ist es für die Steuerung möglich, ein dreidimensionales Bild der Umgebung zu erstellen und neben einer Identifizierung von Waren diese auch im Raum richtig zu lokalisieren sowie deren Ausrichtung zu erfassen. Aufgrund dieser Informationen kann dann der Roboter-Manipulatorarm die Ware sicher und ohne Beschädigung greifen.

Die Sensormittel können Personenschutzsensoren umfassen.

Vorteilhaft kann das Flurförderzeug autonom betrieben werden.

Durch die zuvor beschriebene optischen Sensormittel, aber auch durch sonstige Sensormitten, wie beispielsweise eine Lichtschranke, können Personen in der Umgebung des Fahrzeugs bzw. in einem Arbeitsbereich des Roboter-Manipulatorarms erfasst werden. Aus Sicherheitsgründen kann dann eine Abschaltung erfolgen. Dieselben Personenschutzsensoren sind auch erforderlich, wenn das Flurförderzeug automatisch als autonomes Flurförderzeug fährt. Durch einen Betrieb als autonomes Flurförderzeug kann ein Kommissionieren vollständig ohne Personen und automatisiert erfolgen. Hierfür muss das Flurförderzeug auch ein Navigationssystem aufweisen, um den Weg beispielsweise in einem Lagerbereich zu finden.

Es kann eine Deichsel zur Steuerung im manuellen Betrieb vorgesehen sein.

Vorteilhaft weist die Steuerung Datenübertragungsmittel auf, insbesondere drahtlose Datenübertragungsmittel, mit denen diese mit einem Lagerverwaltungssystem verbunden werden kann.

Die Steuerung kann dadurch Informationen erhalten über Aufträge für die Kommissionierung, aber eventuell Informationen über die Position der Waren, die Art und Weise, wie Waren in dem Transportbehälter angeordnet werden sollen oder können.

Weitere Vorteile und Einzelheiten der Erfindung werden anhand der in den schematischen Figuren dargestellten Ausführungsbeispiele näher erläutert. Hierbei zeigt
- Fig. 1: schematisch ein erstes Ausführungsbeispiel eines erfindungsgemäßen Flurförderzeugs,

- Fig. 2: schematisch ein zweites Ausführungsbeispiel eines erfindungsgemäßen Flurförderzeugs und
- Fig. 3: schematisch das Flurförderzeug der Fig. 2 mit ausgefahrenem Hubmast.

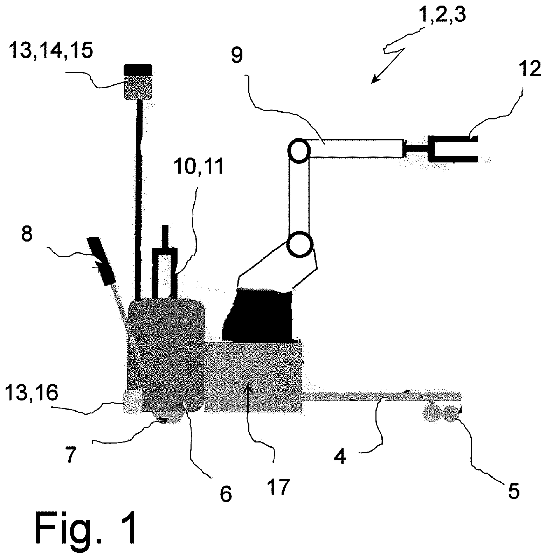

Die Fig. 1 zeigt schematisch ein erstes Ausführungsbeispiel eines erfindungsgemäßen Flurförderzeugs 1. Das Flurförderzeug 1 ist als Horizontalkommissionierer 2 in Form eines Gabelhubwagens 3 ausgeführt, der Lastarme 4 mit Lastrollen 5 aufweist. Die Lastarme 4 können durch die Lastrollen 5 angehoben werden, um einen Initialhub durchzuführen zur Aufnahme von beispielsweise einer Palette. In einem Antriebsteil 6 ist ein Antriebsrad 7 angeordnet, dass durch eine Deichsel 8 gelenkt werden kann. Zwischen Antriebsteil 6 und Lastarme 4 ist ein Batteriefach 17 angeordnet, auf dem ein Roboter-Manipulatorarm 9 angeordnet ist. Der Roboter-Manipulatorarm 9 kann dabei beispielsweise als Teil eines vollständigen Industrieroboters einschließlich eventuell einer Steuerung eingesetzt werden.

Auf der Oberseite des Antriebsteils 6 ist eine Lagerposition 10 angeordnet, in der weitere Greifer 11 gelagert werden. Der Roboter-Manipulatorarm 9 kann einen beispielsweise über eine Wechselaufnahme mit diesem verbundenen Greifer 12 gegen einen der weiteren Greifer 11 selbstständig austauschen, wenn dies aufgrund der Waren erforderlich ist, die gehandhabt werden sollen.

Das Flurförderzeug 1 weist weiterhin Sensormitteln 13 auf, die beispielsweise aus einer Kamera 14 als optischem Sensor 15 bestehen kann. Die Kamera kann beispielsweise eine Abstände erfassende Kamera 14 sein, durch die ein dreidimensionales Bild der Umgebung erstellt werden kann. Dadurch kann die Bewegung des Roboter-Manipulatorarms 9 überwacht werden und das Flurförderzeug 1 kann als autonomes Flurförderzeug betrieben werden. Aus dem Bild der Kamera 14 kann beispielsweise durch die Steuerung die Position des Flurförderzeugs 1 in einem Lager bestimmt werden und ein Navigationssystem gebildet werden. Hierfür sind jedoch auch alle aus dem Stand der Technik bekannten alternativen Möglichkeiten für eine Navigation eines autonomen Flurförderzeugs 1 denkbar. Weiterhin können die Sensormitteln 13 auch für den Personenschutz des autonom fahrenden Flurförderzeugs eingesetzt werden, beispielsweise als die Umgebung vor dem Flurförderzeug 1 überwachender Laserscanner 16.

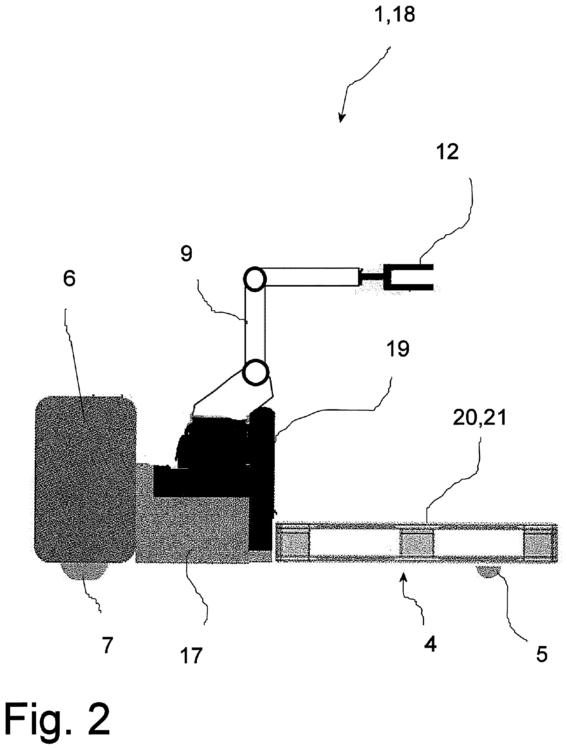

Die Fig. 2 zeigt schematisch ein zweites Ausführungsbeispiel eines erfindungsgemäßen Flurförderzeugs 1. Bauteile und Komponenten, die denjenigen des vorherigen Ausführungsbeispiels entsprechen, sind dabei mit denselben Bezugszeichen versehen. Das Flurförderzeug 1 ist als Vertikalkommissionierer 18 ausgeführt, der einen Hubmast 19 mit mehreren, nicht dargestellten Mastschüssen aufweist. Vor dem Antriebsteil 6 mit dem Antriebsrad 7 befinden sich das Batteriefach 17 sowie die Lastarme 4 mit den Lastrollen 5, auf denen eine Palette 21 als Transportbehälter 20 auffliegt. Der Roboter-Manipulatorarm 9 mit dem Greifer 12 ist bei dem hier vorliegenden Beispiel an einem oberen Mastschuss des Hubmastes 19 angeordnet.

Das Flurförderzeug 1 kann auch die weiteren zuvor genannten Bauelemente wie insbesondere die Sensormitteln, die Lagerungsposition für weitere Greifer und eine Deichsel aufweisen, auch wenn diese nicht dargestellt sind.

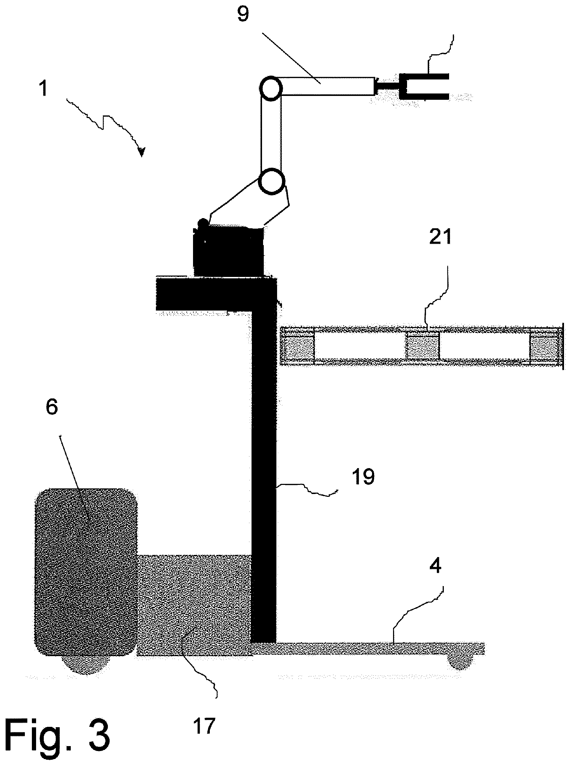

Die Fig. 3 zeigt schematisch das Flurförderzeug 1 der Fig. 2 mit ausgefahrenem Hubmast 19. Eine nicht näher dargestellte Lastgabel mit der Palette 19 ist angehoben und der Roboter-Manipulator Arm 9 ist mit dem oberen Mastschuss ebenfalls angehoben. Dadurch kann der Roboter-Manipulatorarm 9 mit dem Greifer 12 auch aus einem höheren Regalfach Waren aufnehmen und auf der Palette 21 absetzen. Der Roboter-Manipulatorarm 9 ist damit von dem Batteriefach 17, das zwischen Antriebsteil 6 und Lastarme 4 angeordnet ist nach oben gehoben. Hierfür kann es sinnvoll sein, Sensormitteln so vorzusehen, dass auch diese mit angehoben werden.

## Patentansprüche

1. Flurförderzeug zum Kommissionieren mit mindestens einer Lastaufnahmevorrichtung für einen Transportbehälter (20) für Waren, insbesondere eine Lastgabel, sowie einem Fahrantrieb für das Flurförderzeug (1) und mit Sensormitteln (13) zur Erfassung der Umgebung, wobei ein Roboter-Manipulatorarm (9) mit einem Greifer (12) an dem Flurförderzeug (1) angeordnet ist, der mit dem Greifer (12) den Bereich der Lastaufnahmevorrichtung sowie mindestens einen Bereich außerhalb der Grundfläche des Flurförderzeugs (1) erreichen kann und durch eine Steuerung anhand der Daten der Sensormitteln (13) gesteuert werden kann,
**dadurch gekennzeichnet,**
**dass** der Roboter-Manipulatorarm (9) ein sechs Achsen Gelenkarm ist und der Roboter-Manipulatorarm (9) mit dem Greifer (12) durch die Steuerung und aufgrund von Daten, die beispielsweise von einem Warenwirtschaftssystem übertragen werden, gesteuert werden kann, um Waren aus einer Lagerposition zu entnehmen und in dem Transportbehälter auf einer Lastaufnahmevorrichtung zu positionieren.

2. Flurförderzeug nach Anspruch 1,
**dadurch gekennzeichnet,**
**dass** der Roboter-Manipulatorarm (9) als Teil eines Industrieroboters an dem Flurförderzeug (1) angeordnet ist.

3. Flurförderzeug nach Anspruch 1 oder 2,
**dadurch gekennzeichnet,**
**dass** das Flurförderzeug (1) ein Gabelhubwagen mit Lastarmen (4) und einem Antriebsteil (6) ist, wobei die Lastaufnahmevorrichtung durch die Lastarme (4) und/oder eine auf den Lastarmen angeordneten Lastgabel gebildet wird.

4. Flurförderzeug nach Anspruch 3,
**dadurch gekennzeichnet,**
**dass** der Roboter-Manipulatorarm (9) auf dem Antriebsteil (6) angeordnet ist.

5. Flurförderzeug nach Anspruch 3,
**dadurch gekennzeichnet,**
**dass** ein Batteriefach (17) zwischen Antriebsteil (6) und Lastaufnahmevorrichtung ist und der Roboter-Manipulatorarm (9) auf dem Batteriefach (17) angeordnet ist.

6. Flurförderzeug nach einem der Ansprüche 1 bis 4,
**dadurch gekennzeichnet,**
**dass** die Lastaufnahmevorrichtung an einem Hubmast (19) anhebbar geführt ist und der Roboter-Manipulatorarm (9) an dem Hubmast (19) anhebbar ist.

7. Flurförderzeug nach Anspruch 6,
**dadurch gekennzeichnet,**
**dass** der Hubmast (19) ein Teleskopmast ist mit mindestens einem Ausfahrmast und der Roboter-Manipulatorarm (9) an dem Ausfahrmast angeordnet ist.

8. Flurförderzeug nach einem der Ansprüche 1 bis 7,
**dadurch gekennzeichnet,**
**dass** eine Lagerposition (10) für einen oder mehrere Greifer (11) zum Wechseln vorhanden ist.

9. Flurförderzeug nach einem der Ansprüche 1 bis 8,
**dadurch gekennzeichnet,**
**dass** die Sensormitteln (13) optische Sensoren (14) sind, die die Umgebung erfassen, insbesondere Laserscanner (16) oder bildaufnehmende Sensoren mit Bildverarbeitungsmitteln.

10. Flurförderzeug nach einem der Ansprüche 1 bis 9,
**dadurch gekennzeichnet,**
**dass** die Sensormitteln (13) Personenschutzsensoren umfassen.

11. Flurförderzeug nach einem der Ansprüche 1 bis 9,
**dadurch gekennzeichnet,**
**dass** das Flurförderzeug (1) autonom betrieben werden kann.

12. Flurförderzeug nach Anspruch 11,
**dadurch gekennzeichnet,**
**dass** eine Deichsel (8) zur Steuerung im manuellen Betrieb vorgesehen ist.

13. Flurförderzeug nach einem der Ansprüche 1 bis 9,
**dadurch gekennzeichnet,**
**dass** die Steuerung Datenübertragungsmittel aufweist, insbesondere drahtlose Datenübertragungsmittel, mit denen diese mit einem Lagerverwaltungssystem verbunden werden kann.

## Claims

1. Industrial truck for picking having at least one load pick-up device for a transportation container (20) for goods, in particular a loading fork and a traction drive for the industrial truck (1), and having sensor means (13) for sensing the surroundings, wherein a robot manipulator arm (9) with a gripper (12) is arranged on the industrial truck (1), which robot manipulator arm (9) can reach, with the gripper (12), the region of the load pick-up device and at least one region outside the base area of the industrial truck (1) and can be controlled by a controller on the basis of the data of the sensor means (13),
**characterized**
**in that** the robot manipulator arm (9) is a six-axis articulated arm, and the robot manipulator arm (9) with the gripper (12) can be controlled by means of the controller and on the basis of data which is transmitted, for example, by a goods management system, in order to extract goods from a storage position and position them in the transportation container on a load pick-up device.

2. Industrial truck according to Claim 1,
**characterized**
**in that** the robot manipulator arm (9) is arranged as part of an industrial robot on the industrial truck (1).

3. Industrial truck according to Claim 1 or 2,
**characterized**
**in that** the industrial truck (1) is a forklift truck with load arms (4) and a drive component (6), wherein the load pick-up device is formed by the load arms (4) and/or a load fork which is arranged on the load arms.

4. Industrial truck according to Claim 3,
**characterized**
**in that** the robot manipulator arm (9) is arranged on the drive component (6).

5. Industrial truck according to Claim 3,
**characterized**
**in that** a battery compartment (17) is between the drive component (6) and load pick-up device, and the robot manipulator arm (9) is arranged on the battery compartment (17).

6. Industrial truck according to one of Claims 1 to 4,
**characterized**
**in that** the load pick-up device is guided in such a way that it can be lifted up on a lifting mast (19), and the robot manipulator arm (9) can be lifted up on the lifting mast (19) .

7. Industrial truck according to Claim 6,
**characterized**
**in that** the lifting mast (19) is a telescopic mast with at least one extension mast, and the robot manipulator arm (9) is arranged on the extension mast.

8. Industrial truck according to one of Claims 1 to 7,
**characterized**
**in that** a storage position (10) for one or more grippers (11) is present for the purpose of changing.

9. Industrial truck according to one of Claims 1 to 8,
**characterized**
**in that** the sensor means (13) are optical sensors (14) which sense the surroundings, in particular laser scanners (16) or imaging sensors with image-processing means.

10. Industrial truck according to one of Claims 1 to 9,
**characterized**
**in that** the sensor means (13) comprise personal protection sensors.

11. Industrial truck according to one of Claims 1 to 9,
**characterized**
**in that** the industrial truck (1) can be operated autonomously.

12. Industrial truck according to Claim 11,
**characterized**
**in that** a drawbar (8) is provided for the purpose of controlling the manual operating mode.

13. Industrial truck according to one of Claims 1 to 9,
**characterized**
**in that** the controller has data-transmission means, in particular wireless data-transmission means with which it can be connected to a warehouse management system.

## Revendications

1. Convoyeur au sol destiné à la préparation de commandes et comprenant au moins un dispositif de réception de charge destiné à un contenant (20) de transport de marchandises, en particulier une fourche de chargement, ainsi qu'un entraînement de roulement destiné au convoyeur au sol (1) et des moyens de détection (13) destinés à détecter l'environnement, un bras manipulateur de robot (9) muni d'un moyen de préhension (12) étant disposé au niveau du convoyeur au sol (1), lequel bras manipulateur de robot peut atteindre, à l'aide du moyen de préhension (12), la zone du dispositif de réception de charge et au moins une zone située à l'extérieur de la surface de base du convoyeur au sol (1) et peut être commandé au moyen d'une commande sur la base des données des moyens de préhension (13),
**caractérisé en ce que**
le bras manipulateur de robot (9) est un bras articulé à six axes et le bras manipulateur de robot (9) pourvu du moyen de préhension (12) peut être commandé par la commande et sur la base de données transmises, par exemple, par un système de gestion de marchandises, afin de retirer des marchandises d'une position de stockage et de les positionner dans le contenant de transport sur un dispositif de réception de charge.

2. Convoyeur au sol selon la revendication 1, **caractérisé en ce que**
le bras manipulateur de robot (9) est disposé en tant que partie d'un robot industriel sur le convoyeur au sol (1).

3. Convoyeur au sol selon la revendication 1 ou 2,
**caractérisé en ce que**
le convoyeur au sol (1) est un chariot élévateur à fourche pourvu de bras de charge (4) et d'une partie d'entraînement (6), le dispositif de réception de charge étant formé par les bras de charge (4) et/ou une fourche de charge disposée sur les bras de charge.

4. Convoyeur au sol selon la revendication 3,
**caractérisé en ce que**
le bras manipulateur de robot (9) est disposé sur la partie d'entraînement (6).

5. Convoyeur au sol selon la revendication 3,
**caractérisé en ce que**
un compartiment de batterie (17) est prévu entre la partie d'entraînement (6) et le dispositif de réception de charge et le bras manipulateur de robot (9) est disposé sur le compartiment de batterie (17).

6. Convoyeur au sol selon l'une des revendications 1 à 4,
**caractérisé en ce que**
le dispositif de réception de charge est guidé de manière à pouvoir être soulevé sur un mât de levage (19) et le bras manipulateur de robot (9) peut être soulevé sur le mât de levage (19).

7. Convoyeur au sol selon la revendication 6,
**caractérisé en ce que**
le mât de levage (19) est un mât télescopique pourvu d'au moins un mât extensible et le bras manipulateur de robot (9) est disposé sur le mât extensible.

8. Convoyeur au sol selon l'une des revendications 1 à 7,
**caractérisé en ce que**
une position de stockage (10) est prévue pour un ou plusieurs moyens de préhension (11) à changer.

9. Convoyeur au sol selon l'une des revendications 1 à 8,
**caractérisé en ce que**
les moyens de détection (13) sont des capteurs optiques (14) qui détectent l'environnement, en particulier des scanners laser (16) ou des capteurs d'images pourvus de moyens de traitement d'image.

10. Convoyeur au sol selon l'une des revendications 1 à 9,
**caractérisé en ce que**
les moyens de détection (13) comprennent des capteurs de protection de personnes.

11. Convoyeur au sol selon l'une des revendications 1 à 9,
**caractérisé en ce que**
le convoyeur au sol (1) peut fonctionner de manière autonome.

12. Convoyeur au sol selon la revendication 11,
**caractérisé en ce que**
une barre d'attelage (8) est prévue pour la commande en mode manuel.

13. Convoyeur au sol selon l'une des revendications 1 à 9,
**caractérisé en ce que**
la commande comporte des moyens de transmission de données, en particulier des moyens de transmission de données sans fil, au moyen desquels elle peut être reliée à un système de gestion d'entrepôt.
